# EUROPEAN PATENT APPLICATION

(11) **EP 4 804 468 A1**
(43) Date of publication of application: **09.09.2026**
(21) Application number: 25858489.5
(22) Date of filing: 29.05.2025
(51) Int. Cl.: H04L 12/437, H04L 67/12, H04L 12/40, H04L 12/18

(54) **RING-NETWORK COMMUNICATION REDUNDANCY CONTROL METHOD AND APPARATUS, AND ELECTRONIC DEVICE AND READABLE STORAGE MEDIUM**

(30) Priority: 30.08.2024 CN 202411213490
(71) Applicant: Chongqing Changan Technology Co., Ltd., Chongqing 401133 (CN)
(72) Inventor: ZHANG, Peng, Chongqing 401133 (CN); CHEN, Derui, Chongqing 401133 (CN); HE, Jinwei, Chongqing 401133 (CN); DENG, Zhi, Chongqing 401133 (CN); WEN, Qi, Chongqing 401133 (CN)
(74) Representative: Elzaburu S.L.P.
(86) International application number: PCT/CN2025/098200
(87) International publication number: WO 2026/045441

(57) **Abstract**

The present application relates to a method and apparatus for controlling ring network communication redundancy, an electronic device, and a readable storage medium, which relates to the technical field of in-vehicle communication. The method includes: nodes in the in-vehicle ring network system are controlled to detect an Ethernet link abnormal status and broadcast the abnormal status via CAN communication; the master control node may determine, according to abnormal link statuses related to the respective nodes, whether to switch redundant links; if link switching is required, broadcast switching control messages through CAN communication, and the respective nodes can adjust port settings based on switching control messages. Ethernet link detection and redundant link switching control are implemented based on Ethernet communication itself. By integrating into the master control node the functions of determining, according to abnormal link status, whether to switch links and broadcasting switching control messages, the requirements for nodes other than the master control node are relatively low, which can reduce the node hardware resource requirements of a redundant control scheme for in-vehicle ring network communication. Compared with existing control schemes, it is simpler and more feasible, with stronger availability.

## Description

The present application claims the priority to Chinese Patent Application No. 2024112134903, filed with the China National Intellectual Property Administration on August 30, 2024 and entitled "METHOD AND APPARATUS FOR CONTROLLINGRING NETWORK COMMUNICATION REDUNDANCY, ELECTRONIC DEVICE AND READABLE STORAGE MEDIUM". The disclosures of the aforementioned application are hereby incorporated by reference in its entirety.

### TECHNICAL FIELD

The present application relates to the technical field of in-vehicle communication, and in particular, to a method and apparatus for controlling ring network communication redundancy, an electronic device, and a readable storage medium.

### BACKGROUND

With the rapid advancement of automotive electrification and intelligent development, higher requirements have been imposed on the performance of in-vehicle systems. Along with the deployment of high-computing-power computing centers, the automotive electrical and electronic architecture is gradually evolving toward a "central+zone" structure. The central computing center is mainly responsible for computation and decision-making, while a zonal controller is primarily used to transmit vehicle body and sensing-related data to the central computing center and execute control commands issued by the central computing center. To guarantee the bandwidth and reliability of data interaction between the central controller and zonal controller, the central controller and zonal controllers are usually networked in a ring network form based on Ethernet links to achieve mutual redundancy in communication.

The core of the ring network communication redundancy control solution lies in realizing redundant switching upon communication link abnormalities through coordination among all nodes in the ring network. At present, to implement communication redundancy control in the in-vehicle field, some existing solutions integrate functions such as frame replication and frame elimination into each node in the ring network based on TSN technology, so as to ensure valid messages can be acquired under any link conditions. Nevertheless, such solutions impose high requirements on node hardware resources and fail to effectively address the redundancy control issues existing in vehicle ring network communication.

### SUMMARY

One of the objectives of the present application is to provide a method and apparatus for controlling ring network communication redundancy, an electronic device, and a readable storage medium, in order to solve the redundancy control problem in vehicle ring network communication.

To realize the above objective, the technical solutions adopted by the present application are as follows:
a method for controlling ring network communication redundancy, which is applied to an in-vehicle ring network system, the in-vehicle ring network system comprises a plurality of nodes, the plurality of nodes are connected via an Ethernet link to form a ring network link, and the plurality of nodes comprise a master control node. The method for controlling the ring network communication redundancy includes:
broadcasting, by a node, an abnormal link status of the Ethernet link based on control area network CAN communication in response to detecting that the Ethernet link is abnormal;
determining, by the master control node and according to an acquired abnormal link status, whether to perform redundant link switching, and broadcasting a redundant switching control message based on the CAN communication when the redundant link switching is required; and
adjusting, by the node, a port setting of the node itself according to the redundant switching control message, to form a new ring network link according to the adjusted port setting.

Based on the above technical solutions, by adopting the Ethernet link abnormality detection mechanism and Ethernet forwarding table refresh mechanism, the Ethernet communication can be switched to standby Ethernet link communication in case of abnormal link to ensure normal communication between associated nodes.

Further, the determining, by the master control node and according to the acquired abnormal link status, whether to perform the redundant link switching includes:
integrating, by the master control node, the acquired abnormal link status to acquire a global link status of the in-vehicle ring network system; and
determining, by the master control node and according to the global link status, whether to perform redundant link switching.

Further, the determining, by the master control node and according to the global link status, whether to perform redundant link switching includes:
comparing whether the global link status is consistent with a global link status recorded during a previous judgment in response to that the global link status remains unchanged within a preset first time period;
if consistent, the redundant link switching is not required; and
if inconsistent, the redundant link switching is required.

Further, the redundant switching control message carries the global link status, the adjusting, by the node, the port setting of the node itself according to the redundant switching control message includes:
determining, by the node and according to the global link status and a preset mapping relationship, a port parameter corresponding to the global link status; and
adjusting, by the node and according to the port parameter, the port setting corresponding to the node.

Further, the port parameter comprises a target node corresponding to a current node, the adjusting, according to the port parameter, the port setting corresponding to the node includes:
blocking, according to a data flow direction between the current node and a faulty node, message transmission and reception of a switch corresponding to the current node, wherein the faulty node refers to a node having abnormal link communication with the current node; and
modifying a port corresponding to a media access control MAC address of the faulty node to a port corresponding to a MAC address of the target node.

Further, the redundant switching control message carries a redundant link to be switched, the adjusting, by the node, the port setting of the node itself according to the redundant switching control message includes:
adjusting, by the node, the port setting of the node itself according to the redundant link to be switched.

Further, the redundant switching control message includes a switching instruction and a global link status.

Further, the detecting, by the node, that the Ethernet link is abnormal comprises: detecting, by the node, that a direct connection Ethernet link is abnormal.

Further, the method for controlling the ring network communication redundancy further includes:
periodically detecting, by the node, whether an Ethernet link is abnormal;
correspondingly, the broadcasting, by the node, the abnormal link status of the Ethernet link based on control area network CAN communication in response to detecting that the Ethernet link is abnormal comprises:
   broadcasting, by the node, an abnormal link status of an Ethernet link based on the CAN communication in response to detecting a same Ethernet link is abnormal over multiple consecutive detection cycles.

A method for controlling ring network communication redundancy, which is applied to a first node of an in-vehicle ring network system, the in-vehicle ring network system comprises the first node and a plurality of second nodes connected via an Ethernet link, the first node and the second nodes communicate with each other based on a controller area network CAN, the method for controlling the ring network communication redundancy includes:
acquiring link status messages broadcast by the second nodes based on CAN communication, wherein the link status messages indicate a status of an Ethernet link detected by the second nodes; and
determining, according to the status of the Ethernet link in the link status messages, whether the in-vehicle ring network system needs to perform redundant link switching, if necessary, broadcasting a redundant switching control message based on the CAN communication, where the redundant switching control message is configured to instruct the second nodes to perform a link switching operation.

Further, the determining, according to the status of the Ethernet link in the link status messages, whether the in-vehicle ring network system needs to perform redundant link switching includes:
integrating the status of the Ethernet link detected by the plurality of second nodes to acquire a global link status; and
determining, according to the global link status, whether to perform the redundant link switching.

Further, the determining, according to the global link status, whether to perform the redundant link switching includes:
comparing whether the global link status is consistent with a preset reference link status;
if consistent, determining that the redundant link switching is not required; and
if inconsistent, determining the redundant link switching is required, and acquiring and recording switched global link status.

Further, the reference link status refers to a global link status recorded when redundant link switching was determined to be required last time.

Further, a message data field of the redundant switching control message comprises a flag bit for indicating the global link status.

Further, the first node and the second nodes are connected via the Ethernet link, the method for controlling the ring network communication redundancy further includes:
detecting a status of a connected Ethernet link; and
determining, according to the status of the Ethernet link in the link status messages, whether the in-vehicle ring network system needs to perform the redundant link switching comprises:
   determining, according to the detected status of the Ethernet link and the status of the Ethernet link in the link status messages, whether the in-vehicle ring network system needs to perform the redundant link switching.

Further, it further includes:
in response to determining need for the redundant link switching, determining, according to the global link status, whether to perform a link switching operation, and performing the link switching operation if necessary.

A method for controlling ring network communication redundancy, which is applied to a second node of an in-vehicle ring network system, there are a plurality of second nodes, and different second nodes are connected via an Ethernet link, the in-vehicle ring network system further includes a first node that communicates with the second nodes based on a controller area network CAN, and the method for controlling the ring network communication redundancy includes:
detecting a status of a connected Ethernet link;
broadcasting link status messages via CAN communication in response to determining that the status of the Ethernet link meets a preset abnormality condition, wherein the link status messages indicate the status of the Ethernet link;
receiving a redundant switching control message broadcast by the first node through the CAN communication; and
determining, according to the redundant switching control message, whether to perform a link switching operation, and performing the link switching operation if necessary.

Further, the detecting the status of the connected Ethernet link includes:
periodically detecting the status of the connected Ethernet link; and
correspondingly, the broadcasting the link status messages via the CAN communication in response to determining that the status of the Ethernet link meets the preset abnormality condition comprises:
   determining whether the status of the Ethernet link have been detected to be abnormal in multiple consecutive detection cycles; if yes, broadcasting the link status messages via the CAN communication.

Further, a message data field of the link status messages includes a node flag bit and a status flag bit; the node flag bit indicates identity information of the node sending the link status message, and the status flag bit indicates the status of the Ethernet link.

Further, the redundant switching control message comprises the global link status, the global link status comprises status of the Ethernet link corresponding to the plurality of second nodes in the in-vehicle ring network system, the determining, according to the redundant switching control message, whether to perform the link switching operation comprises:
determining, according to the global link status and a preset mapping relationship, a target link to be connected, wherein the target link is determined according to the Ethernet link connecting a current second node to other second nodes;
if the target link is inconsistent with a connected Ethernet link of the current second node, the link switching operation needs to be performed;
if the target link is consistent with a connected Ethernet link of the current second node, the link switching operation needs not to be performed.

Further, the performing the link switching operation comprises:
determining, according to the target link, a target node to be connected; and
modifying a port corresponding to the target node to a port where the target link is located.

An apparatus for controlling ring network communication redundancy, which is applied to an in-vehicle ring network system, the in-vehicle ring network system comprises a plurality of nodes, the plurality of nodes are connected via an Ethernet link to form a ring network link, the plurality of nodes include a master control node, and the apparatus for controlling the ring network communication redundancy includes:
a node detection module, configured to control a node to broadcast an abnormal link status of an Ethernet link based on control area network CAN communication in response to detecting that the Ethernet link is abnormal;
a master control management module, configured to control the master control node to determine, according to an acquired abnormal link status, whether to perform redundant link switching, and broadcast a redundant switching control message based on the CAN communication when the redundant link switching is required; and
a switching module, configured to control the node to adjust a port setting of the node itself according to the redundant switching control message, to form a new ring network link according to the adjusted port setting.

An electronic device, including: a processor and a memory communicatively connected to the processor;
where the memory stores a computer-executable instruction;
the processor executes the computer-executable instruction stored in the memory to implement any one of the method for controlling the ring network communication redundancy described above.

A computer-readable storage medium, where a computer-executable instruction is stored in the computer-readable storage medium, and the computer-executable instruction, when executed by a processor, are configured to implement any one of the method for controlling the ring network communication redundancy described above.

A computer program product, including a computer program which, when executed by a processor, implements any one of the method for controlling the ring network communication redundancy described above.

Beneficial effects of the present application are as follows:
(1) in the present application, the Ethernet link detection and determination of a coordination of link switching among different nodes are all realized through the CAN communication. The high reliability of the CAN communication can be used to ensure that the status of all Ethernet links can be synchronized to corresponding nodes in case of any Ethernet link abnormality, so as to improve the overall communication reliability of the in-vehicle ring network system;
(2) in the present application, Ethernet link detection and redundant link switching control are implemented based on Ethernet communication itself. By integrating into the master control node the functions of determining whether to switch links according to abnormal link status and broadcasting switching control messages, the requirements for nodes other than the master control node are relatively low, which can reduce the node hardware resource requirements of a redundant control scheme for in-vehicle ring network communication. Compared with existing control schemes, it is simpler and more feasible, with stronger availability.

### BRIEF DESCRIPTION OF DRAWINGS

FIG. 1 is a schematic diagram of an application scenario of a method for controlling ring network communication redundancy provided by an embodiment of the present application;
FIG. 2 is a flowchart of a method for controlling ring network communication redundancy provided by an embodiment of the present application;
FIG. 3a is a schematic diagram of a communication architecture of an in-vehicle ring network system provided by an embodiment of the present application;
FIG. 3b is a schematic diagram of redundant switching when a link abnormality occurs in the ring network system shown in FIG. 3a;
FIG. 4 is a flowchart of a link switching judgment method provided by an embodiment of the present application;
FIG. 5 is a flowchart of a node port adjustment method provided by an embodiment of the present application;
FIG. 6 is a schematic diagram of node function module deployment provided by an embodiment of the present application;
FIG. 7 is a flowchart of another method for controlling ring network communication redundancy provided by an embodiment of the present application;
FIG. 8 is a schematic diagram of a redundant control process provided by an embodiment of the present application;
FIG. 9 is a flowchart of still another method for controlling ring network communication redundancy provided by an embodiment of the present application;
FIG. 10 is a flowchart of yet another method for controlling ring network communication redundancy provided by an embodiment of the present application;
FIG. 11 is a schematic structural diagram of an apparatus for controlling ring network communication redundancy provided by an embodiment of the present application;
FIG. 12 is a schematic structural diagram of an electronic device provided by an embodiment of the present application.

The aforementioned drawings illustrate clear embodiments of the present application, which will be described in further detail hereinafter. Neither the drawings nor the written descriptions are intended to limit the scope of the concept of the present application in any manner, but are intended to explain the concepts of the present application to the person skilled in the art with reference to specific embodiments.

### DESCRIPTION OF EMBODIMENTS

Implementations of the present application will be described below with reference to the accompanying drawings and preferred embodiments. The person skilled in the art can readily appreciate other advantages and effects of the present application from the contents disclosed in the present specification. The present application may also be implemented or applied in other specific implementations, and various modifications and alterations may be made to the details herein from different perspectives and applications without departing from the spirit of the present application. It should be understood that the preferred embodiments are merely illustrative of the present application, rather than limiting its protection scope.

It should be noted that the drawings provided in the following embodiments only schematically illustrate the basic concept of the present application, and only show components relevant to the present application instead of being drawn according to the actual quantity, shape and size of components in practical implementation. In actual application, the shape, quantity and proportion of each component can be adjusted arbitrarily, and the layout form of components may be more complicated.

Exemplary embodiments will be described in detail herein with reference to the accompanying drawings. In the following description with reference to the drawings, identical reference numerals denote identical or similar elements throughout different drawings unless otherwise specified. The implementations described in the exemplary embodiments below do not represent all implementations consistent with the present application. On the contrary, they are merely examples of apparatuses and methods conforming to some aspects of the present application as set forth in the appended claims.

The terms "comprise", "include" or any variants thereof are intended to cover non-exclusive inclusion, such that a process, method, product or apparatus including a set of elements includes not only those elements, but also other elements not expressly listed, or elements inherent to such process, method, product or apparatus. Without further limitations, the presence of additional identical or equivalent elements in the process, method, product or apparatus containing the aforementioned elements is not excluded. Words such as first and second are used merely for naming purposes and do not indicate any specific order.

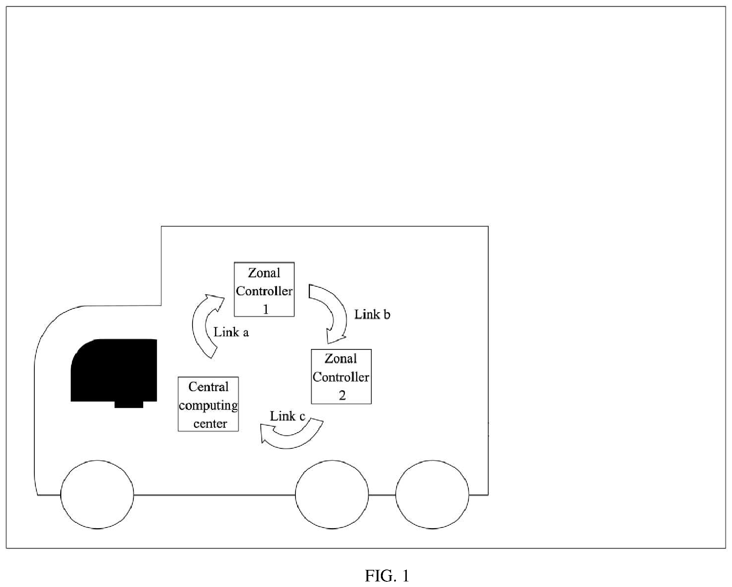

FIG. 1 is a schematic diagram of an application scenario provided by an embodiment of the present application. As shown in FIG. 1, an overall architecture of the in-vehicle system may include a central computing center and a zonal controller. The central computing center can be configured to perform computation and decision-making. The zonal controller can transmit data related to the vehicle body and sensing-related data to the central computing center, perform control instructions issued by the central computing center, and undertake part of basic computation. To ensure the bandwidth and reliability of data interaction between the central computing center and the zonal controller, they are usually networked in the form of a ring network via Ethernet links to realize mutual communication redundancy. For example, the central computing center and two zonal controllers in FIG. 1 can jointly form an Ethernet ring network through Link a, Link b and Link c. The central computing center may be an integrated cockpit central control system deployed on vehicle side (hereinafter referred to as the integrated cockpit system), and the zonal controller may be vehicle control systems such as intelligent driving systems and intelligent control systems arranged on the vehicle side.

The present application is applicable to an in-vehicle ring network system including the scenario shown in FIG. 1, so as to meet requirements of vehicle control systems such as intelligent driving and intelligent control on the vehicle side to the vehicle communication architecture. The in-vehicle ring network system may include at least three nodes, among which there is a master control node. In some application scenarios, all nodes can form an Ethernet ring network communication system in a daisy-chain manner with Ethernet as the communication medium. In some application scenarios, the Ethernet ring network communication system can also be composed of other in-vehicle systems capable of establishing Ethernet ring networks, with each in-vehicle system adopting an independent Ethernet switch as a network connection medium. In the present application, a single node in the in-vehicle ring network system may correspond to an integrated cockpit system on the vehicle side, or any vehicle control system such as an intelligent driving and an intelligent control. The master control node can be the integrated cockpit system or any vehicle control system.

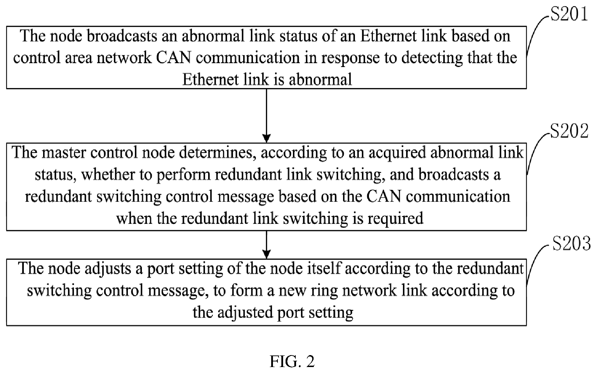

The above-mentioned application scenarios are only partial examples. The person skilled in the art can expand the application scope according to specific service scenarios, which is not specifically limited by the embodiments of the present application. In combination with the application scenario shown in FIG. 1, the method for controlling the ring network communication redundancy provided in the first aspect of the present application will be described below with reference to FIG. 2 to FIG. 6.

FIG. 2 is a flowchart of a method for controlling ring network communication redundancy provided by an embodiment of the present application. As shown in FIG. 2, the method may include:
step S201, the node broadcasts an abnormal link status of an Ethernet link based on control area network CAN communication in response to detecting that the Ethernet link is abnormal.

The method for controlling the ring network communication redundancy of the present embodiment is applicable to the in-vehicle ring network system. The in-vehicle ring network system includes a plurality of nodes interconnected via the Ethernet link to form a ring link. The plurality of nodes include a master control node.

CAN (Controller Area Network, Controller Area Network) is a serial communication network supporting a distributed control system. The CAN communication can be implemented via a control area network-based bus by a CAN protocol, a CANFD (CAN with Flexible Data rate) protocol and so on.

Specifically, nodes in the in-vehicle ring network system can be connected through the CAN bus. Each node in the ring network system is capable of detecting the status of adjacent Ethernet links. If an abnormal adjacent Ethernet link is detected, the node encapsulates the abnormal status information of the link into a message and send to the bus based on the CAN protocol to perform broadcast notification. The node detects an abnormal adjacent Ethernet link meaning that the node detects an abnormal direct Ethernet link. For instance, Zonal Controller 1 and Zonal Controller 2 in FIG. 1 are directly connected via Link b, and both can detect whether Link b is abnormal through an underlying link status judgment mechanism.

In some possible implementations, the node periodically detects whether an Ethernet link is abnormal. Correspondingly, the node broadcasting the abnormal link status of the Ethernet link based on CAN communication in response to detecting that the Ethernet link is abnormal includes:
the node broadcasts an abnormal link status of an Ethernet link based on the CAN communication in response to detecting the same Ethernet link is abnormal over multiple consecutive detection cycles. For example, the node can detect whether a direct link is abnormal at an interval of 10 ms. If the direct link is abnormal for three consecutive cycles, the link status can be encapsulated into a preset abnormal message format and broadcasts the message externally via CAN at a 10 ms interval.

Step S202, the master control node determines, according to an acquired abnormal link status, whether to perform redundant link switching, and broadcasts a redundant switching control message based on the CAN communication when the redundant link switching is required.

The master control node may be a node selected from the respective nodes of the ring network system. The redundant switching control message can be generated by the master control node according to the abnormal link status, or be a preset message acquired by the master control node from an internal or external storage module based on the abnormal link status.

Specifically, the node can obtain the abnormal link status reported by other nodes through broadcasting. The master control node may determine, according to the abnormal link status detected by the master control node itself and/or an abnormal link status provided by other nodes, whether the ring network system needs to perform redundant link switching via an internal decision module. If necessary, the master control node broadcasts the redundant switching control message via the CAN bus. The decision module inside the master control node is configured to execute an algorithm corresponding to a preset decision rule. The decision rule may refer to determining, based on current abnormal link status, whether there are nodes in the ring network system that cannot communicate normally.

It can be understood that each node in the ring network system can communicate with different nodes through multiple direct links. Even if the direct link between a node and another node is abnormal, the two nodes can still realize indirect communication via links between other nodes.

Step S203, the node adjusts a port setting of the node itself according to the redundant switching control message, to form a new ring network link according to the adjusted port setting.

Specifically, the redundant switching control message may carry redundant links to be switched for all nodes. After the redundant switching control message is broadcast over the CAN bus, each node can adjust its own switch port setting by virtue of an Ethernet forwarding table refresh mechanism according to the redundant links in the redundant switching control message, disable abnormal links and switch to redundant links for communication. The ring network system forms a new ring network link by combining adjusted redundant links of each node and unadjusted links.

In the above embodiment, nodes in the in-vehicle ring network system can detect abnormal status of the Ethernet links and broadcast abnormal status based on the CAN communication. The master control node determines, according to abnormal link status related to each node, whether to switch redundant links, and if switching is needed, switching control messages are broadcast based on the CAN communication. Each node can adjust the port setting according to the switching control messages. In this method, the Ethernet link detection and determination of a coordination of link switching among different nodes are all realized through the CAN communication. The high reliability of CAN communication can be used to ensure that the status of all Ethernet links can be synchronized to corresponding nodes in case of any Ethernet link abnormality. Ethernet link detection and redundant link switching control are implemented based on Ethernet communication itself. By adopting the Ethernet link abnormality detection mechanism and Ethernet forwarding table refresh mechanism, the Ethernet communication can be switched to standby Ethernet link communication in case of abnormal link to ensure normal communication between associated nodes. This solution not only improves the reliability of the Ethernet communication, but also requires only integrating, in the master control node, the functions of determining, based on the abnormal link status, whether to switch link and broadcasting the switching control messages. The requirements for nodes other than the master control node are relatively low, which can reduce the node hardware resource requirements of a redundant control scheme for in-vehicle ring network communication. Compared with existing control schemes, it is simpler and more feasible, with stronger availability.

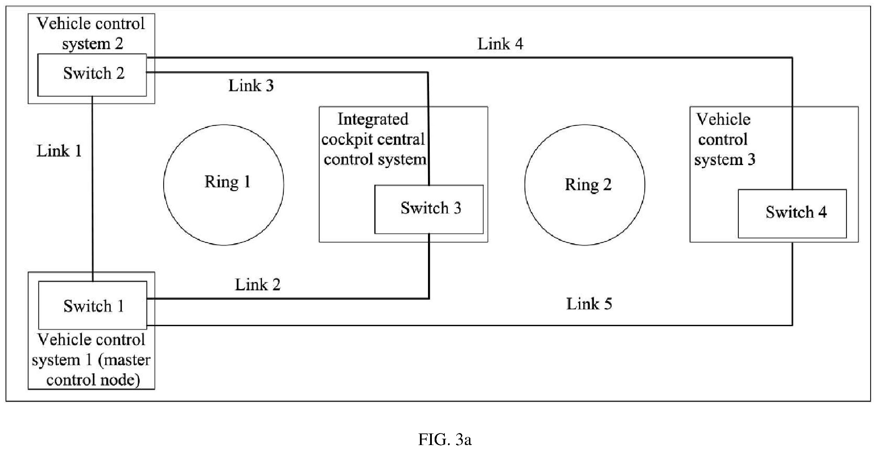

FIG. 3a is a schematic diagram of a communication architecture of an in-vehicle ring network system provided by an embodiment of the present application. As shown in FIG. 3a, the entire in-vehicle ring network system includes a vehicle control system 1, a vehicle control system 2, a vehicle control system 3 and an integrated cockpit central control system. Each system includes a switch for communication. The vehicle control system 1 is directly connected to the vehicle control system 2 via Link 1. The vehicle control system 1 is directly connected to the integrated cockpit central control system via Link 2. The vehicle control system 2 is directly connected to the integrated cockpit central control system via Link 3. The vehicle control system 2 is connected to the vehicle control system 3 via Link 4. The vehicle control system 1 is directly connected to the vehicle control system 3 via Link 5. The vehicle control system 1, the vehicle control system 2 and the integrated cockpit central control system can form a ring Link (Ring 1). The vehicle control system 1, the vehicle control system 2 and the vehicle control system 3 can form a ring Link (Ring 2).

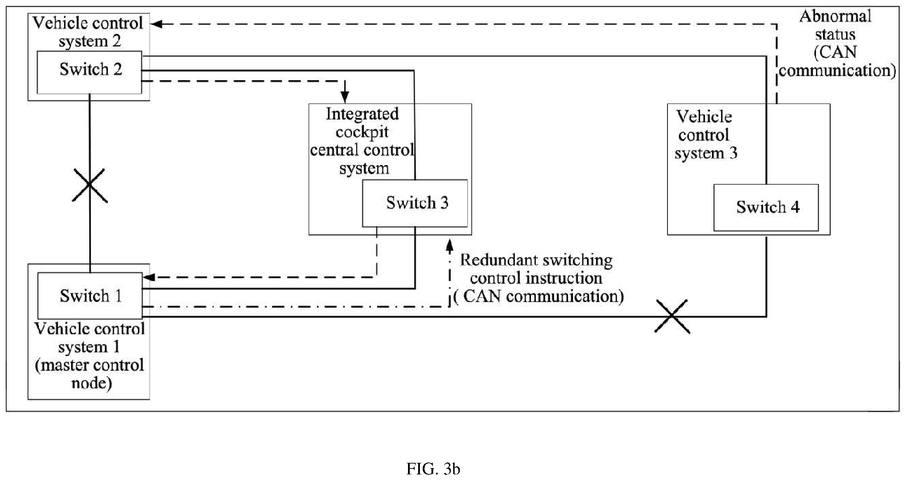

FIG. 3b is a schematic diagram of redundant switching when a link abnormality occurs in the ring network system shown in FIG. 3a. As shown in FIG. 3b, when Link 1 and Link 5 in the Ethernet link of the ring network system are abnormal, the vehicle control system 1 and the vehicle control system 2 detect the abnormality of Link 1 through the underlying link status judgment mechanism. Similarly, the vehicle control system 1 and the vehicle control system 3 detect the abnormality of Link 5 via the underlying link status judgment mechanism. After detecting the abnormality, the vehicle control system 1, the vehicle control system 2 and the vehicle control system 3 broadcast the abnormal status through the CAN communication. After summarizing the abnormal status, the vehicle control system 1 determines the need to switch redundant links and broadcasts redundant switching control instructions through the CAN communication. The vehicle control system 1, the vehicle control system 2 and the vehicle control system 3 adjust port settings based on the redundant switching control instructions to switch to standby redundant links.

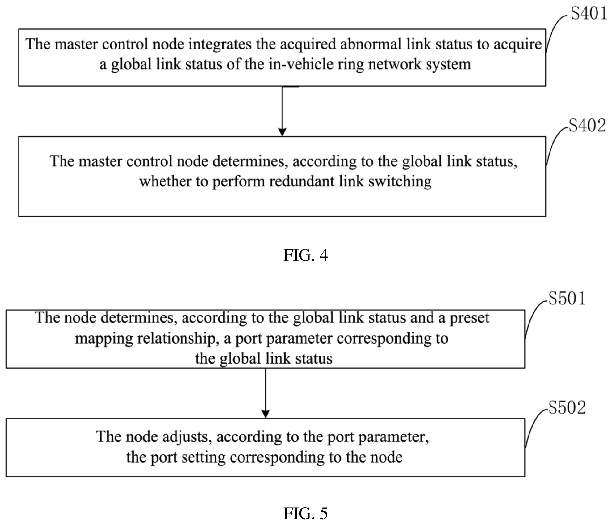

In an embodiment, as shown in FIG. 4, the determining, by the master control node and according to the acquired abnormal link status, whether to perform the redundant link switching includes:
step S401, the master control node integrates the acquired abnormal link status to acquire a global link status of the in-vehicle ring network system.

Specifically, after detecting the status of the direct link is abnormal, the node can periodically broadcast messages indicating the abnormal status via the CAN communication. The master control node can summarize and integrate the relevant abnormal link status of the respective nodes, and obtain the global link status of the ring network system after integration. For example, the messages broadcast by the respective nodes can contain node numbers and link mask information, and the link mask information can indicate abnormal link information (such as link numbers) in the ring network system.

Step S402, the master control node determines, according to the global link status, whether to perform redundant link switching.

Specifically, comparing whether the global link status is consistent with a global link status recorded during a previous judgment in response to that the global link status remains unchanged within a preset first time period; if consistent, the redundant link switching is not required; and if inconsistent, the redundant link switching is required.

In some possible implementations, the master control node can compare the global link status summarized this time with the global link status when determining whether to perform redundant link switching last time. If the two are consistent, this decision is not to perform redundant link switching. If the two are not consistent, the decision is to perform redundant link switching.

In some possible implementations, the master control node can integrate, based on the periodically broadcasted abnormal link status of the respective nodes, the global link status corresponding to each cycle. If the integrated global link statuses for multiple consecutive cycles are inconsistent, it is not necessary to determine whether to perform the redundant link switching. If the integrated global link statuses for multiple consecutive cycles are consistent, then it is necessary to determine whether the redundant link switching is needed based on the global link status.

In an embodiment, nodes and links in the ring network system can be numbered in advance, and the message format for the CAN communication can be set based on the node numbers and link numbers. Taking the embodiments shown in FIG. 3a and FIG. 3b as an example, the node identifiers are that: the vehicle control system 1 with identifier 001, the vehicle control system 2 with identifier 010, the vehicle control system 3 with identifier 011, and the integrated cockpit central control system with identifier 100. There are a total of 5 links in the system. Five bits in the message ranging from bit 0 to bit 4 correspond to Link 1 to Link 5 respectively. A value of 0 at a corresponding bit indicates a normal link status, while a value of 1 indicates a link abnormality.

As shown in FIG. 3b, after detecting a link abnormality, the node can record the link number and encapsulate the link abnormality status information into a message according to the message structure shown in Table 1. The link status is then sent to the CAN bus via a CAN message at a cycle of 10 ms.

**Table 1**

| Node number | Link status |
|---|---|
| 3bit | 5bit |
| Vehicle control system 1: 001 | Each bit represents one link, bit 0 to bit 4 correspond to Link 1 to Link 5 respectively |
| Vehicle control system 2: 010 | |
| Vehicle control system 3: 011 | A value of 0 at a corresponding bit indicates a normal link status, while a value of 1 indicates a link abnormality |
| Integrated cockpit central control system: 100 | |

After the vehicle control system 1 (the master control node) acquires the status of adjacent links Link 1, Link 2 and Link 5, the link statuses are recorded within the vehicle control system 1. Upon receiving link statuses of the vehicle control system 2, the vehicle control system 3 and the integrated cockpit central control system, vehicle-wide link statuses are integrated to obtain the global link status. The integration method is implemented by performing OR operation on the received link status notification messages. Taking the system shown in FIG. 3b as an example, the calculation result of link status is 10001, which means Link 1 and Link 5 are abnormal in the global link status, and all other links are in normal statuses. Alternatively, each node periodically sends messages carrying abnormal status information to the bus. If the global link statuses integrated by the master control node are consistent for three consecutive cycles, this global link status can be compared with the global link status recorded by the master control node during the previous judgment. Link switching shall be performed if the comparison results are inconsistent.

In an embodiment, the redundant switching control message carries a redundant link to be switched, the adjusting, by the node, the port setting of the node itself according to the redundant switching control message includes: the node adjusts the port setting of the node itself according to the redundant link to be switched.

In an embodiment, the redundant switching control message carries the global link status, as shown in FIG. 5, the adjusting, by the node, the port setting of the node itself according to the redundant switching control message includes:
step S501, the node determines, according to the global link status and a preset mapping relationship, a port parameter corresponding to the global link status.

Specifically, each node can obtain the global link status through the redundant switching control messages broadcast to the bus by the master control node, and can determine, based on the preset mapping relationship, port parameters corresponding to the global link status. The port parameters can include a target link after switching, a blocked port, a target FDB (forwarding database, forwarding database) table for a corresponding switch port, a VLAN (Virtual Local Area Network, virtual local area network) status table, and so on.

Step S502, the node adjusts, according to the port parameter, the port setting corresponding to the node.

In some possible implementations, the port parameter includes a target node corresponding to the current node. The current node is a node that receives the redundant switching control message and is ready to adjust the port setting, while the target node is a node with which the current node communicates via a direct link after switching. Message transmission and reception of a switch corresponding to the current node are blocked according to a data flow direction between the current node and a faulty node, and a port corresponding to a media access control MAC address of the first node is modified to a port corresponding to the MAC address of the target node. The faulty node refers to a node having abnormal link communication with the current node. Modifying the port corresponding to the MAC address can be realized by refreshing the forwarding database FDB table on the switch corresponding to the current node, or by other means.

In some possible implementations, the redundant switching control message includes a switching instruction and a global link status.

If the master control node determines that link switching is required based on the global link status, it shall encapsulate the switching instruction and global link status into the redundant switching control message in accordance with the message structure specified in Table 2, and transmit the message to the CAN bus at an interval of 10 ms via a CAN message.

**Table 2**

| Switching instruction | Global link status |
|---|---|
| 1bit | 5bit |
| 0: No switching required | Each bit represents one link, bit 0 to bit 4 correspond to Link 1 to Link 5 respectively |
| 1: Switching required | |
| | A value of 0 at a corresponding bit indicates a normal link status, while a value of 1 indicates link abnormality |

Each node can obtain the global link status via the redundant switching control message. Each node can query a mapping table between the global link status and the switching targets configured inside the nodes and block abnormal link ports preferentially according to the queried switching targets. The blocking mode is realized by performing VLAN control on ports corresponding to the switching targets through a switch control interface, and blocking message transmission and reception in both ingress and egress directions of ports via a VLAN disabling operation. This blocking mechanism prevents a potential Ethernet network storm risk after link communication is restored. After port blocking is completed, the FDB table refresh is performed on a switch FDB table operation interface based on the queried switching targets. This refresh can switch a switch route of the abnormal link to the redundant link, ensuring normal communication between the respective nodes even when links are abnormal.

Taking the embodiments shown in FIG. 3a and FIG. 3b as examples, when Link 1 and Link 5 are abnormal, the vehicle control system 1, the vehicle control system 2 and the vehicle control system 3 first disable the VLANs of ports corresponding to Link 1 and Link 5, subsequently, the vehicle control system 1 switches the vehicle control system 2, the vehicle control system 3 and the integrated cockpit central control system in accordance with the FDB table rules specified in Table 3 and Table 4. Upon completion of switching, the respective nodes can maintain normal communication through redundant links continuously.

**Table 3**

| | Before switching (Global Link Status: 00000) | | | |
|---|---|---|---|---|
| | Link 5 and Link 3 are initially configured blocked ports. | | | |
| | Vehicle control system 1 MAC | Vehicle control system 2 MAC | Vehicle control system 3 MAC | Integrated cockpit MAC |
| Vehicle control system 1 | / | Port where Link 1 is located | Port where Link 1 is located | Port where Link 2 is located |
| Vehicle control system 2 | Port where Link 1 is located | / | Port where Link 4 is located | Port where Link 1 is located |
| Vehicle control system 3 | Port where Link 4 is located | Port where Link 4 is located | / | Port where Link 4 is located |
| Integrated cockpit central control system | Port where Link 2 is located | Port where Link 2 is located | Port where Link 2 is located | / |

**Table 4**

| | After switching (Global Link Status: 10001) | | | |
|---|---|---|---|---|
| | Link 5 and Link 1 are blocked, and the channel of Link 3 is enabled | | | |
| | Vehicle control system 1 MAC | Vehicle control system 2 MAC | Vehicle control system 3 MAC | Integrated cockpit MAC |
| Vehicle control system 1 | / | Port where Link 2 is located | Port where Link 2 is located | Port where Link 2 is located |
| Vehicle control system 2 | Port where Link 3 is located | / | Port where Link 4 is located | Port where Link 3 is located |
| Vehicle control system 3 | Port where Link 4 is located | Port where Link 4 is located | / | Port where Link 4 is located |
| Integrated cockpit central control system | Port where Link 2 is located | Port where Link 3 is located | Port where Link 3 is located | / |

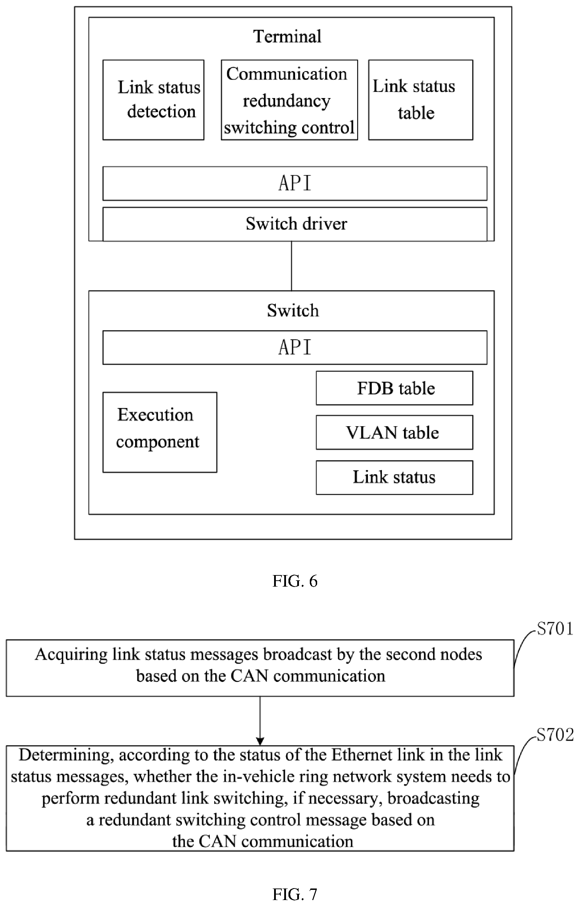

FIG. 6 is a schematic diagram of node function module deployment provided by an embodiment of the present application. As shown in FIG. 6, a terminal serving as a node includes a link status detection module, a communication redundancy switching control module and a link status table. The link status detection module of the master control node is additionally provided with a link status integration function, and the link redundancy switching module is additionally provided with a redundancy switching decision function. After the node is powered on and operates, the link status detection module periodically detects a status of a direct link of the node. If direct link abnormalities are detected for multiple consecutive cycles, it records the abnormal status and compares the currently recorded abnormal status with the previous one. If the comparison result is a consistent status, no action shall be taken; if the comparison result is an inconsistent status, the current abnormal status shall be encapsulated into a message and broadcast via CAN communication. The communication redundancy switching control module matches the redundancy switching control messages broadcast by the master control node and the global link status in the link status table, and switches to a standby link according to the matched result.

In the present embodiment, each Ethernet node is configured with a mapping table among link statuses, target switching VLANs and FDB tables. After integrating the abnormal statuses of the respective nodes, the master control node in the link notifies all nodes of the global link status through the CAN message. Each node performs link redundancy switching based on the mapping table among link statuses, target switching VLANs and FDB tables. In this way, all nodes can receive the global link status of the entire vehicle. Therefore, when one, two or even more Ethernet links are abnormal, as long as the redundancy switching targets for the link abnormality are predefined, each Ethernet node only needs to look up the table based on the status and perform switching after receiving a vehicle-wide Ethernet link status. The judgment logic is simple and easy to implement without complicated precondition judgment, enabling redundancy processing for link abnormalities in all scenarios.

According to a second aspect of the present application, a method for controlling ring network communication redundancy is provided. The method can be applied to a first node of an in-vehicle ring network system, the in-vehicle ring network system includes the first node and a plurality of second nodes connected via an Ethernet link, the first node and the second nodes communicate with each other based on controller area network CAN. Both the first node and the second node may be vehicle control systems with data processing and communication functions. For example, the first node may be the master control node in each embodiment related to the method for controlling the ring network communication redundancy according to the above first aspect, and the second node may be other nodes excluding the master control node in the in-vehicle ring network system.

In an embodiment, as shown in FIG. 7, the method applied to the first node may include:
S701, acquiring link status messages broadcast by the second nodes based on CAN communication.

The link status messages indicate a status of the Ethernet link detected by the second nodes.

S702, determining, according to the status of the Ethernet link in the link status messages, whether the in-vehicle ring network system needs to perform redundant link switching, if necessary, broadcasting a redundant switching control message based on the CAN communication.

The redundant switching control message is configured to instruct the second nodes to perform a link switching operation.

In some possible implementations, the first node can integrate the status of the Ethernet link detected by the plurality of second nodes to acquire a global link status; and then determine, according to the global link status, whether to perform the redundant link switching.

In some possible implementations, the determining, according to the global link status, whether to perform the redundant link switching includes: comparing whether the global link status is consistent with a preset reference link status; if consistent, determining that the redundant link switching is not required; if inconsistent, determining that the redundant link switching is required, and acquiring and recording the switched global link status.

In some possible implementations, the reference link status refers to a global link status recorded when the redundant link switching was determined to be required last time.

In some possible implementations, a message data field of the redundant switching control message comprises a flag bit for indicating the global link status. For example, multiple binary bits may be used in messages to indicate the statuses of different links.

In the present embodiment, the first node may or may not be connected to the second node via an Ethernet link. It should be noted that the first node and the second node are connected at least through a CAN bus.

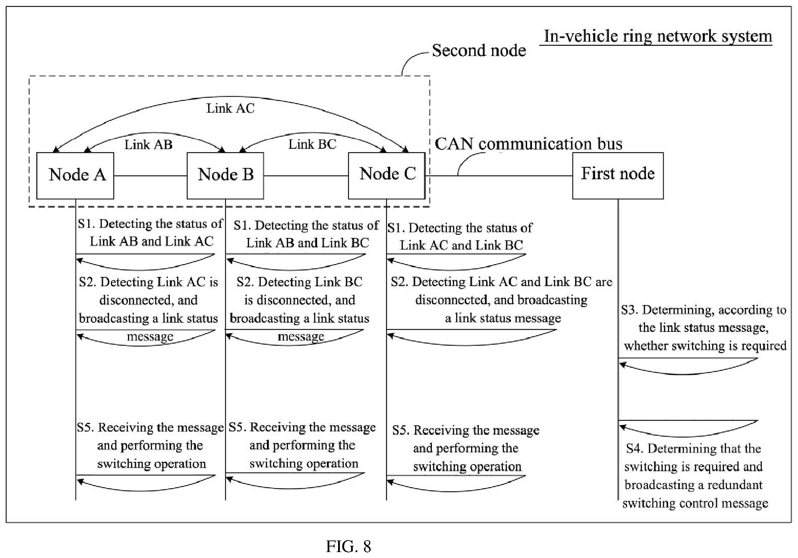

FIG. 8 is a schematic diagram of a redundant control process provided by an embodiment of the present application. As shown in FIG. 8, in this embodiment, the in-vehicle ring network system includes a first node and three second nodes (Node A, Node B and Node C). The first node, Node A, Node B and Node C are connected via the CAN bus. Node A, Node B and Node C are interconnected pairwise through the Ethernet link. Link AC is an initially blocked link, while Link AB and Link BC are connected links. Data of Node A can be transmitted to Node B via Link AB, and can also be transmitted to Node C through Link AB and Link AC.

A redundant control process corresponding to the embodiment shown in FIG. 8 may include that: S1, the second node detects whether its direct links are in a connected state. S2, if both Link AC and Link BC are disconnected, each second node broadcasts the detected link status. S3, the first node acquires messages broadcast by the respective second nodes via the CAN bus. According to the statuses detected by the respective second nodes in the messages, the first node determines that data exchange is still available between Node A and Node B, whereas Node C cannot exchange data with Node A or Node B. S4, the first node determines that redundant link switching is required and broadcasts the redundant switching control message. S5, the respective second nodes receive the messages broadcast by the first node through the CAN bus and perform redundant link switching operations based on the messages. For instance, when Node A sends data to Node C, data is originally transmitted to Node B via Link AB for forwarding; after switching, the data is directly sent to Node C through Link AC. As another example, when Node B sends data to Node C, data is originally directly transmitted to Node C via Link BC; after switching, the data needs to be sent to Node A via Link AB, and then forwarded to Node C by Node A through Link AC. Link switching can be implemented by modifying the FDB table in the switch and other means. For example, in corresponding relationship of the FDB table of the switch of Node A, the port corresponding to the MAC address of Node C is the port where Link AB is located. The corresponding relationship in the FDB table can be modified to change the port corresponding to the MAC address of Node C to the port where Link AC is located, so as to activate Link AC.

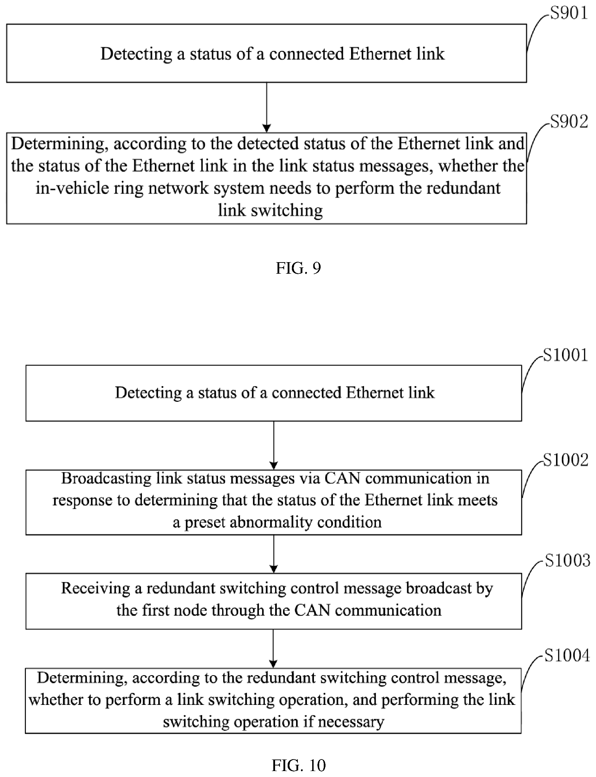

In another embodiment, the first node is connected to the second node via the Ethernet link. As shown in FIG. 9, the method applied to the first node may further include:
S901, detecting a status of a connected Ethernet link; and
the determining, according to the status of the Ethernet link in the link status messages, whether the in-vehicle ring network system needs to perform the redundant link switching includes:
   S902, determining, according to the detected status of the Ethernet link and the status of the Ethernet link in the link status messages, whether the in-vehicle ring network system needs to perform the redundant link switching.

Specifically, when the first node is connected to the second node via an Ethernet link, the first node can also detect the status of its direct Ethernet link. It can integrate this status with the status of the Ethernet link contained in the link status message broadcast by the second node to obtain the global link status, and determine, according to the global link status, whether redundant link switching is required for the in-vehicle ring network system.

In some possible implementations, it further includes: in response to determining need for the redundant link switching, determining, according to the global link status, whether to perform a link switching operation, and performing the link switching operation if necessary.

In the present embodiment, the first node may be the vehicle control system 1 shown in FIGS. 3a and 3b, and the second nodes may be the vehicle control system 2, vehicle control system 3 and integrated cockpit central control system shown in FIGS. 3a and 3b.

According to a third aspect of the present application, a method for controlling ring network communication redundancy is provided. The method is applied to a second node of an in-vehicle ring network system, there are a plurality of second nodes, and different second nodes are connected via an Ethernet link, the in-vehicle ring network system further comprises a first node that communicates with the second nodes based on the controller area network CAN. Both the first node and the second node may be vehicle control systems with data processing and communication functions. For example, the first node may be the master control node in the respective embodiments related to the method for controlling the ring network communication redundancy according to the above first aspect, and the second node may be other nodes excluding the master control node in the in-vehicle ring network system.

In an embodiment, as shown in FIG. 10, the method applied to the second node may include:
S1001, detecting a status of a connected Ethernet link;
S1002, broadcasting link status messages via CAN communication in response to determining that the status of the Ethernet link meets a preset abnormality condition.

The link status messages indicate the status of the Ethernet link.

In some possible implementations, the detecting status of the connected Ethernet link includes: periodically detecting the status of the connected Ethernet link; and correspondingly, the broadcasting the link status messages via the CAN communication in response to determining that the status of the Ethernet link meets the preset abnormality condition includes: determining whether the status of the Ethernet link have been detected to be abnormal in multiple consecutive detection cycles; if yes, broadcasting the link status messages via the CAN communication.

For example, the second node may be configured to detect the status of direct Ethernet link at a cycle of 10 ms. If it detected that an Ethernet link is in an unconnected state for three consecutive cycles, it can be determined that the Ethernet link is abnormal, and the abnormality can be written into the link status message in accordance with the corresponding data field format of the message for broadcasting.

In some possible implementations, a message data field of the link status message includes a node flag bit and a status flag bit; the node flag bit indicates identity information of the node sending the link status message, and the status flag bit indicates the status of the Ethernet link.

The message data field of the link status message may refer to the embodiments related to Table 1 in the first aspect described above. For example, when the second node is any system shown in FIG. 3a, three binary bits can be configured in the message data field of the link status message as the node flag bit for identifying the identity of the second node, and another five binary bits can be configured as the status flag bit, each of which indicates the status of any link shown in FIG. 3a.

S1003, receiving a redundant switching control message broadcast by the first node through the CAN communication.

S1004, determining, according to the redundant switching control message, whether to perform a link switching operation, and performing the link switching operation if necessary.

The redundant switching control message may contain a switching instruction, and the second node may determine whether to perform the link switching operation by parsing the switching instruction in the redundant switching control message. In addition, the redundant switching control message may further contain the global link status and/or a target node to be connected by each node. The global link status can indicate the connection statuses of all Ethernet links in the in-vehicle ring network system.

Exemplarily, the message data field of the redundant switching control message may refer to Table 2 in the above first aspect. The switching instruction can be defined as a preset binary bit. When the binary bit is 0, the second node determines that the link switching operation needs not to be performed; when the binary bit is 1, the second node determines, according to the global link status or target nodes to be connected, to perform link switching operation.

If the second node determines to perform the link switching operation, it may determine, according to the global link status in the redundant switching control message, the target link to be switched and switches to the target link by adjusting port setting. Alternatively, the second node may determine, based on the target node to be connected in the redundant switching control message, the target link to be switched and switches to the target link by adjusting the port setting.

In some possible implementations, the redundant switching control message includes the global link status, the global link status includes the status of the Ethernet link corresponding to the plurality of second nodes in the in-vehicle ring network system, the determining, according to the redundant switching control message, whether to perform the link switching operation includes:
S10041, determining, according to the global link status and a preset mapping relationship, a target link to be connected.

The target link is determined according to the Ethernet link connecting a current second node to other second nodes.

S10042, if the target link is inconsistent with a connected Ethernet link of the current second node, the link switching operation needs to be performed.

Exemplarily, the performing the link switching operation includes: determining, according to the target link, a target node to be connected; and modifying a port corresponding to the target node to a port where the target link is located.

S10043, if the target link is consistent with a connected Ethernet link of the current second node, the link switching operation needs not to be performed.

In some possible implementations, the redundant switching control message may contain a target node that the second node needs to connect to. After parsing the redundant switching control message to obtain the target node, the second node can determine whether the Ethernet link between the second node and the target node is in a connected state. If it is in a connected state, the link switching operation needs not to be performed; if it is in an unconnected state, the link switching operation needs to be performed to enable communication between the current second node and the target node.

Taking FIG. 8 as an example, the redundant switching control message can contain a target node that each second node needs to connect to. For example, Link AB and Link BC are originally connected links, and even if Link AC is disconnected, Node A can exchange data with Node C. At this time, the only target node that Node A needs to connect to is Node B. Once Link BC is in an unconnected state, the target nodes that Node A needs to connect to are both Node B and Node C. After receiving the message carrying the target nodes (Node B and Node C), Node A can activate Link AC and switch the data communication link with Node C to Link AC.

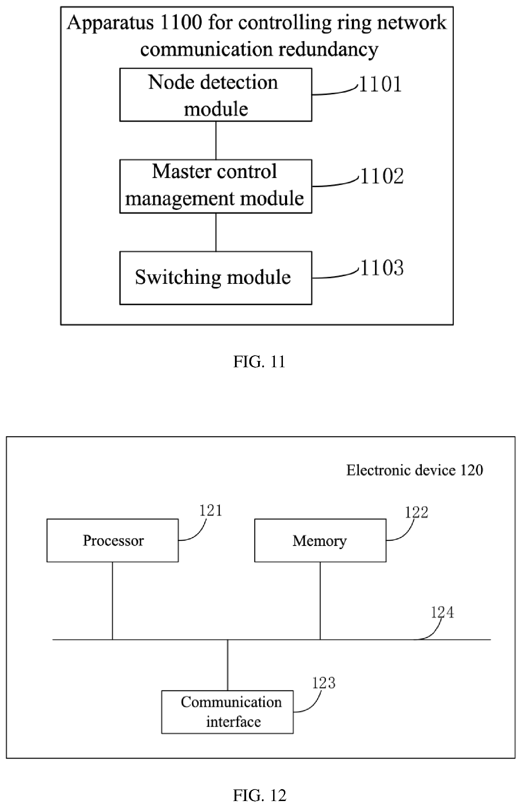

FIG. 11 is a schematic structural diagram of an apparatus for controlling ring network communication redundancy provided by an embodiment of the present application. As shown in FIG. 11, the apparatus for controlling the ring network communication redundancy 1100 may include:
a node detection module 1101, configured to control a node to broadcast an abnormal link status of an Ethernet link based on control area network CAN communication in response to detecting that the Ethernet link is abnormal;
a master control management module 1102, configured to control the master control node to determine, according to an acquired abnormal link status, whether to perform redundant link switching, and broadcast a redundant switching control message based on the CAN communication when the redundant link switching is required; and
a switching module 1103, configured to control the node to adjust a port setting of the node itself according to the redundant switching control message, to form a new ring network link according to the adjusted port setting.

In an embodiment, the master control management module 1102 may include:
an integration unit, configured to control the master control node to integrate the acquired abnormal link status to acquire a global link status of the in-vehicle ring network system; and
a switching judgment unit, configured to control the master control node to determine, according to the global link status, whether to perform redundant link switching.

In an embodiment, the switching judgment unit may include:
a status comparison unit, configured to control the master control node to compare whether the global link status is consistent with a global link status recorded during a previous judgment in response to that the global link status remains unchanged within a preset first time period; if consistent, the redundant link switching is not required; and if inconsistent, the redundant link switching is required.

In an embodiment, the switching module 1103 may include:
a parameter determination unit, configured to control the node to determine, according to the global link status and a preset mapping relationship, a port parameter corresponding to the global link status; and
an adjustment unit, configured to control the node to adjust, according to the port parameter, the port setting corresponding to the node.

In an embodiment, the adjustment unit is further configured to: block, according to a data flow direction between the current node and a first node, message transmission and reception of a switch corresponding to the current node, wherein the first node refers to a node having abnormal link communication with the current node; and perform, according to a target node, FDB table refresh on a switch corresponding to the current node.

In an embodiment, the switching module 1103 is further configured to control the node to adjust the port setting of the node itself according to the redundant link to be switched.

In an embodiment, the redundant switching control message comprises a switching instruction and a global link status.

In an embodiment, the node detection module 1101 is further configured to control the node to detect that a direct connection Ethernet link is abnormal.

In an embodiment, the node detection module 1101 is further configured to control the node to periodically detect whether an Ethernet link is abnormal; and is further configured to control the node to broadcast an abnormal link status of an Ethernet link based on the CAN communication in response to detecting a same Ethernet link is abnormal over multiple consecutive detection cycles.

It should be understood that the aforementioned apparatus embodiments are merely illustrative, and the apparatus of the present application may be implemented in other manners. For example, the division of units and modules in the above embodiments is merely a logical function division, and alternative division modes may be adopted in actual implementation. For example, multiple units, modules or components may be combined or integrated into another system, and certain features may be omitted or not executed.

In addition, unless otherwise specified, each functional unit or module in the embodiments of the present application may be integrated into a single unit or module, or each unit/module may exist as an independent physical entity, or two or more units or modules integrated together. The integrated units and modules above can be implemented either in the form of hardware or software program modules.

FIG. 12 is a schematic structural diagram of an electronic device provided by an embodiment of the present application. As shown in FIG. 12, the electronic device 120 includes:
a processor 121, a memory 122 and a communication interface 123;
the memory 122 is configured to store executable instructions of the processor 121, and the executable instructions may be computer-executable instructions;
the processor 121 is configured to execute the technical solutions in any of the aforementioned method embodiments by running the executable instructions.

Optionally, the memory 122 may be arranged independently or integrated with the processor 121.

Optionally, when the memory 122 is a component independent of the processor 121, the electronic device 120 may further include a bus 124. The memory 122 and the communication interface 123 are connected to the processor 121 via the bus 124 to realize mutual communication, and the communication interface 123 is configured for communication with other devices.

Optionally, the communication interface 123 may be specifically implemented by a transceiver, and is configured to realize communication between the database access apparatus and other devices such as clients, read-write libraries and read-only libraries. The memory may include a random access memory (Random Access Memory, RAM), and may further include non-volatile memory (non-volatile memory) such as at least one disk storage.

The bus 124 may be a peripheral component interconnect (Peripheral Component Interconnect, PCI) bus, an extended industry standard architecture (extended industry standard architecture, EISA) bus or the like. Buses can be classified into address buses, data buses, control buses and the like. For simplicity of illustration, only one line is shown in the figure, which does not mean there is only one bus or one single type of bus.

The aforementioned processor may be a general-purpose processor including a central processing unit CPU, a network processor (network processor, NP), etc., and may also be a digital signal processor DSP, an application specific integrated circuit ASIC, a field programmable gate array FPGA, other programmable logic devices, discrete gate or transistor logic devices, and discrete hardware components.

The electronic device is configured to implement the technical solutions in any of the aforementioned method embodiments, with identical implementation principles and technical effects, which will not be repeated herein.

Embodiments of the present application further provide a readable storage medium which may be a computer-readable storage medium storing a computer program. The computer program, when executed by a processor, implements the technical solutions provided in any of the aforementioned method embodiments.

Embodiments of the present application further provide a computer program product including a computer program. The computer program is configured to implement the technical solutions provided in any of the aforementioned method embodiments when executed by a processor.

The person skilled in the art may understand that all or part of the steps for implementing the aforementioned method embodiments may be accomplished by hardware associated with program instructions. The aforementioned program may be stored in a computer-readable storage medium. When executed, the program performs the steps of each aforementioned method embodiment. The aforementioned storage medium includes various media capable of storing program codes such as ROM, RAM, magnetic disks and optical discs.

In the aforementioned embodiments, each of them is described with different emphases. Details not elaborated in a certain embodiment may be referred to relevant descriptions of other embodiments. All technical features of the above embodiments can be arbitrarily combined. For the sake of conciseness, all possible combinations of the technical features in the above embodiments are not described. Nevertheless, any combinations thereof without logical conflicts shall be deemed to fall within the scope disclosed in this specification.

The person skilled in the art can easily conceive other embodiments of the present application after studying the specification and practicing the invention disclosed herein. The present application is intended to cover any modifications, applications and adaptive alterations thereof that comply with the general principles of the present application and incorporate common general knowledge and conventional technical means in the relevant technical field not disclosed herein. The specification and embodiments are merely illustrative, and the true scope and spirit of the present application shall be defined by the appended claims.

The above embodiments are merely preferred examples for fully illustrating the present application, and shall not limit its protection scope. Equivalent substitutions and modifications made by those skilled in the art based on the present application shall all fall within its protection scope.

## Claims

1. A method for controlling ring network communication redundancy, which is applied to an in-vehicle ring network system, the in-vehicle ring network system comprises a plurality of nodes, the plurality of nodes are connected via an Ethernet link to form a ring network link, the plurality of nodes comprise a master control node, and the method for controlling the ring network communication redundancy comprises:
broadcasting, by a node, an abnormal link status of an Ethernet link based on control area network CAN communication in response to detecting that the Ethernet link is abnormal;
determining, by the master control node and according to an acquired abnormal link status, whether to perform redundant link switching, and broadcasting a redundant switching control message based on the CAN communication when the redundant link switching is required; and
adjusting, by the node, a port setting of the node itself according to the redundant switching control message, to form a new ring network link according to the adjusted port setting.

2. The method for controlling the ring network communication redundancy according to claim 1, wherein the determining, by the master control node and according to the acquired abnormal link status, whether to perform the redundant link switching comprises:
integrating, by the master control node, the acquired abnormal link status to acquire a global link status of the in-vehicle ring network system; and
determining, by the master control node and according to the global link status, whether to perform redundant link switching.

3. The method for controlling the ring network communication redundancy according to claim 2, wherein the determining, by the master control node and according to the global link status, whether to perform redundant link switching comprises:
comparing whether the global link status is consistent with a global link status recorded during a previous judgment in response to that the global link status remains unchanged within a preset first time period;
if consistent, the redundant link switching is not required; and
if inconsistent, the redundant link switching is required.

4. The method for controlling the ring network communication redundancy according to claim 2 or 3, wherein the redundant switching control message carries the global link status, the adjusting, by the node, the port setting of the node itself according to the redundant switching control message comprises:
determining, by the node and according to the global link status and a preset mapping relationship, a port parameter corresponding to the global link status; and
adjusting, by the node and according to the port parameter, the port setting corresponding to the node.

5. The method for controlling the ring network communication redundancy according to claim 4, wherein the port parameter comprises a target node corresponding to a current node, the adjusting, according to the port parameter, the port setting corresponding to the node comprises:
blocking, according to a data flow direction between the current node and a faulty node, message transmission and reception of a switch corresponding to the current node, wherein the faulty node refers to a node having abnormal link communication with the current node; and
modifying a port corresponding to a media access control MAC address of the faulty node to a port corresponding to a MAC address of the target node.

6. The method for controlling the ring network communication redundancy according to any one of claims 1 to 5, wherein the redundant switching control message carries a redundant link to be switched, the adjusting, by the node, the port setting of the node itself according to the redundant switching control message comprises:
adjusting, by the node, the port setting of the node itself according to the redundant link to be switched.

7. The method for controlling the ring network communication redundancy according to any one of claims 1 to 5, wherein the redundant switching control message comprises a switching instruction and a global link status.

8. The method for controlling the ring network communication redundancy according to any one of claims 1 to 5, wherein the detecting, by the node, that the Ethernet link is abnormal comprises: detecting, by the node, that a direct connection Ethernet link is abnormal.

9. The method for controlling the ring network communication redundancy according to any one of claims 1 to 5, further comprising:
periodically detecting, by the node, whether an Ethernet link is abnormal;
correspondingly, the broadcasting, by the node, the abnormal link status of the Ethernet link based on control area network CAN communication in response to detecting that the Ethernet link is abnormal comprises:
broadcasting, by the node, an abnormal link status of an Ethernet link based on the CAN communication in response to detecting a same Ethernet link is abnormal over multiple consecutive detection cycles.

10. A method for controlling ring network communication redundancy, which is applied to a first node of an in-vehicle ring network system, the in-vehicle ring network system comprises the first node and a plurality of second nodes connected via an Ethernet link, the first node and the second nodes communicate with each other based on a controller area network CAN, and the method for controlling the ring network communication redundancy comprises:
acquiring link status messages broadcast by the second nodes based on CAN communication, wherein the link status messages indicate a status of an Ethernet link detected by the second nodes; and
determining, according to the status of the Ethernet link in the link status messages, whether the in-vehicle ring network system needs to perform redundant link switching, if necessary, broadcasting a redundant switching control message based on the CAN communication, where the redundant switching control message is configured to instruct the second nodes to perform a link switching operation.

11. The method for controlling the ring network communication redundancy according to claim 10, wherein the determining, according to the status of the Ethernet link in the link status messages, whether the in-vehicle ring network system needs to perform redundant link switching comprises:
integrating the status of the Ethernet link detected by the plurality of second nodes to acquire a global link status; and
determining, according to the global link status, whether to perform the redundant link switching.

12. The method for controlling the ring network communication redundancy according to claim 11, wherein the determining, according to the global link status, whether to perform the redundant link switching comprises:
comparing whether the global link status is consistent with a preset reference link status;
if consistent, determining that the redundant link switching is not required; and
if inconsistent, determining the redundant link switching is required, and acquiring and recording switched global link status.

13. The method for controlling the ring network communication redundancy according to claim 12, wherein the reference link status refers to a global link status recorded when redundant link switching was determined to be required last time.

14. The method for controlling the ring network communication redundancy according to any one of claims 11 to 13, wherein a message data field of the redundant switching control message comprises a flag bit for indicating the global link status.

15. The method for controlling the ring network communication redundancy according to any one of claims 11 to 13, wherein the first node and the second nodes are connected via the Ethernet link, the method for controlling the ring network communication redundancy further comprises:
detecting a status of a connected Ethernet link; and
determining, according to the status of the Ethernet link in the link status messages, whether the in-vehicle ring network system needs to perform the redundant link switching comprises:
determining, according to the detected status of the Ethernet link and the status of the Ethernet link in the link status messages, whether the in-vehicle ring network system needs to perform the redundant link switching.

16. The method for controlling the ring network communication redundancy according to claim 15, further comprising:
in response to determining need for the redundant link switching, determining, according to the global link status, whether to perform a link switching operation, and performing the link switching operation if necessary.

17. A method for controlling ring network communication redundancy, which is applied to a second node of an in-vehicle ring network system, there are a plurality of second nodes, and different second nodes are connected via an Ethernet link, the in-vehicle ring network system further comprises a first node that communicates with the second nodes based on a controller area network CAN, and method for controlling the ring network communication redundancy comprises:
detecting a status of a connected Ethernet link;
broadcasting link status messages via CAN communication in response to determining that the status of the Ethernet link meets a preset abnormality condition, wherein the link status messages indicate the status of the Ethernet link;
receiving a redundant switching control message broadcast by the first node through the CAN communication; and
determining, according to the redundant switching control message, whether to perform a link switching operation, and performing the link switching operation if necessary.

18. The method for controlling the ring network communication redundancy according to claim 17, wherein the detecting the status of the connected Ethernet link comprises:
periodically detecting the status of the connected Ethernet link; and
correspondingly, the broadcasting the link status messages via the CAN communication in response to determining that the status of the Ethernet link meets the preset abnormality condition comprises:
determining whether the status of the Ethernet link have been detected to be abnormal in multiple consecutive detection cycles; if yes, broadcasting the link status messages via the CAN communication.

19. The method for controlling the ring network communication redundancy according to claim 17 or 18, wherein a message data field of the link status messages comprises a node flag bit and a status flag bit; the node flag bit indicates identity information of the node sending the link status message, and the status flag bit indicates the status of the Ethernet link.

20. The method for controlling the ring network communication redundancy according to any one of claims 17 to 19, wherein the redundant switching control message comprises the global link status, the global link status comprises status of the Ethernet link corresponding to the plurality of second nodes in the in-vehicle ring network system, the determining, according to the redundant switching control message, whether to perform the link switching operation comprises:
determining, according to the global link status and a preset mapping relationship, a target link to be connected, wherein the target link is determined according to the Ethernet link connecting a current second node to other second nodes;
if the target link is inconsistent with a connected Ethernet link of the current second node, the link switching operation needs to be performed;
if the target link is consistent with a connected Ethernet link of the current second node, the link switching operation needs not to be performed.

21. The method for controlling the ring network communication redundancy according to claim 20, wherein the performing the link switching operation comprises:
determining, according to the target link, a target node to be connected; and
modifying a port corresponding to the target node to a port where the target link is located.

22. An apparatus for controlling ring network communication redundancy, which is applied to an in-vehicle ring network system, the in-vehicle ring network system comprises a plurality of nodes, the plurality of nodes are connected via an Ethernet link to form a ring network link, the plurality of nodes comprise a master control node, and the apparatus for controlling the ring network communication redundancy comprises:
a node detection module, configured to control a node to broadcast an abnormal link status of an Ethernet link based on control area network CAN communication in response to detecting that the Ethernet link is abnormal;
a master control management module, configured to control the master control node to determine, according to an acquired abnormal link status, whether to perform redundant link switching, and broadcast a redundant switching control message based on the CAN communication when the redundant link switching is required; and
a switching module, configured to control the node to adjust a port setting of the node itself according to the redundant switching control message, to form a new ring network link according to the adjusted port setting.

23. An electronic device, comprising: a processor and a memory communicatively connected to the processor;
wherein the memory stores a computer-executable instruction;
the processor executes the computer-executable instruction stored in the memory to implement the method according to any one of claims 1 to 21.

24. A computer-readable storage medium, wherein a computer-executable instruction is stored in the computer-readable storage medium, and the computer-executable instruction, when executed by a processor, is configured to implement the method according to any one of claims 1 to 21.

25. A computer program product, comprising a computer program which, when executed by a processor, implements the method according to any one of claims 1 to 21.
